# EUROPEAN PATENT APPLICATION

(11) **EP 4 738 144 A1**
(43) Date of publication of application: **06.05.2026**
(21) Application number: 24852038.9
(22) Date of filing: 19.06.2024
(51) Int. Cl.: G06F 16/332, G06F 16/33, G06F 16/338, G10L 15/22, G06F 40/186, G06F 3/16, G06N 3/0475, G06N 3/08, G06N 20/00

(54) **ELECTRONIC DEVICE, METHOD, AND COMPUTER-READABLE STORAGE MEDIUM FOR OBTAINING TEXT TO BE INPUT TO NEURAL NETWORK**

(30) Priority: 04.08.2023 KR 20230102487; 31.08.2023 KR 20230115889
(71) Applicant: Samsung Electronics Co., Ltd., Suwon-si, Gyeonggi-do 16677 (KR)
(72) Inventor: LEE, Kwanho, Suwon-si, Gyeonggi-do 16677 (KR); KO, Youngtae, Suwon-si, Gyeonggi-do 16677 (KR)
(74) Representative: Gulde & Partner
(86) International application number: PCT/KR2024/008475
(87) International publication number: WO 2025/033681

(57) **Abstract**

An electronic device according to an embodiment is configured to obtain a first text on the basis of receiving a first user input from a user. The electronic device is configured to generate a second text for obtaining a second user input by using a keyword corresponding to a portion of the first text, and obtain template information indicating a format corresponding to a neural network for obtaining output information related to the first text. The electronic device is configured to obtain a third text obtained on the basis of a second user input after outputting the second text. The electronic device is configured to obtain a fourth text having the format and based on the first text and the third text by using the template information.

## Description

### [Technical Field]

The present disclosure relates to an electronic device, a method, and a computer readable storage medium for obtaining text to be inputted to a neural network.

### [Background Art]

A large language model (LLM) may mean an interactive language model configured with an artificial neural network including a plurality of parameters. The large language model may be trained using unlabeled learning data based on supervised learning or unsupervised learning. In order to improve quality of a result value to be outputted through the large language model, prompt engineering for adjusting an input value of the large language model may be used.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

An electronic device according to an embodiment may include at least one processor including processing circuitry, and memory, storing instructions, including one or more storage media. The instructions, when executed by the at least one processor individually or collectively, may cause the electronic device to obtain a first text, based on receiving a first user input from a user. The instructions, when executed by the at least one processor individually or collectively, may cause the electronic device to obtain template information indicating a format corresponding to a neural network for obtaining output information related to the first text and generate a second text for obtaining a second user input, using a keyword corresponding to a portion of the first text. The instructions, when executed by the at least one processor individually or collectively, may cause the electronic device to obtain a third text obtained based on the second user input, after outputting the second text. The instructions, when executed by the at least one processor individually or collectively, may cause the electronic device to obtain a fourth text having the format and based on the first text and the third text, using the template information.

A method of an electronic device according to an embodiment may include obtaining a first text, based on receiving a first user input from a user. The method may include obtaining template information indicating a format corresponding to a neural network for obtaining output information related to the first text and generate a second text for obtaining a second user input, using a keyword corresponding to a portion of the first text. The method may include obtaining a third text obtained based on the second user input, after outputting the second text. The method may include obtaining a fourth text having the format and based on the first text and the third text, using the template information.

In a computer readable storage medium storing one or more programs according to an embodiment, the one or more programs, when executed by a processor of an electronic device, may be configured to cause the electronic device to obtain a first text, based on receiving a first user input from a user. The one or more programs, when executed by the processor of the electronic device, may be configured to cause the electronic device to obtain template information indicating a format corresponding to a neural network for obtaining output information related to the first text and generate a second text for obtaining a second user input, using a keyword corresponding to a portion of the first text. The one or more programs, when executed by the processor of the electronic device, may be configured to cause the electronic device to obtain a third text obtained based on the second user input, after outputting the second text. The one or more programs, when executed by the processor of the electronic device, may be configured to cause the electronic device to obtain a fourth text having the format and based on the first text and the third text, using the template information.

### [Description of the Drawings]

FIG. 1 is a block diagram of an electronic device in a network environment according to various embodiments.
FIG. 2 illustrates an example of a block diagram of an electronic device according to an embodiment.
FIG. 3 illustrates an example of an operation in which an electronic device according to an embodiment obtains a keyword.
FIG. 4A illustrates an example of a flowchart indicating an operation of an electronic device according to an embodiment.
FIG. 4B illustrates an example of an operation in which an electronic device according to an embodiment obtains sub question information by using an additional question.
FIG. 5 illustrates an example of a template obtained by an electronic device according to an embodiment.
FIG. 6 illustrates an example of an operation in which an electronic device according to an embodiment generates a prompt.
FIG. 7 illustrates an example of a user interface for obtaining a prompt according to an embodiment.
FIG. 8 illustrates an example of a flowchart indicating an operation of an electronic device according to an embodiment.
FIG. 9 is a block diagram indicating an integrated intelligence system according to various embodiments.
FIG. 10 is a diagram indicating a form in which relationship information between a concept and an operation is stored in a database according to various embodiments.
FIG. 11 is a diagram indicating a screen in which an electronic device according to various embodiments processes a voice input received through an intelligent app.

### [Mode for Invention]

Hereinafter, an embodiment of the present disclosure will be described in detail with reference to the drawings so that those having ordinary knowledge in the art to which the present disclosure belongs may easily implement it. However, the present disclosure may be implemented in several different forms and is not limited to the embodiment described herein. In association with a description of the drawings, the same or similar reference numerals may be used for the same or similar components. In addition, in the drawings and the related description, a description of well-known functions and configurations may be omitted for clarity and conciseness.

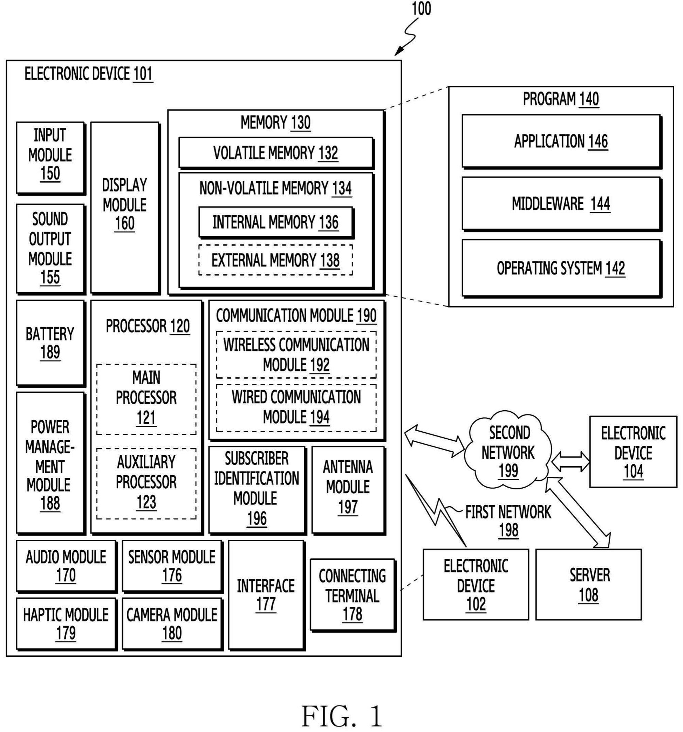

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

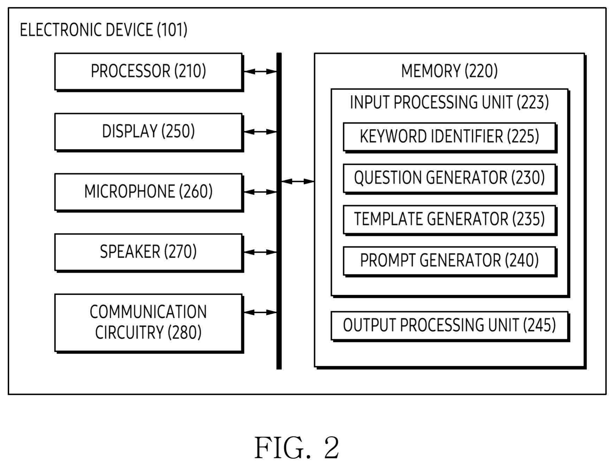

FIG. 2 illustrates an example of a block diagram of an electronic device according to an embodiment. An electronic device 101 of FIG. 2 may include the electronic device 101 of FIG. 1.

Referring to FIG. 2, the electronic device 101 according to an embodiment may include at least one of a processor 210 (e.g., the processor 120 of FIG. 1), memory 220 (e.g., the memory 130 of FIG. 1), a display 250 (e.g., the display module 160 of FIG. 1), a microphone 260 (e.g., the input module 150 of FIG. 1), a speaker 270 (e.g., the sound output module 155 of FIG. 1), or communication circuitry 280 (e.g., the communication module 190 of FIG. 1). The processor 210, the memory 220, the display 250, the microphone 260, the speaker 270, and the communication circuitry 280 may be electronically and/or operably coupled with each other by an electronical component such as a communication bus 202. In an embodiment, hardware of the electronic device 101 operably being coupled may mean that a direct connection, or an indirect connection between the hardware is established by wire or wirelessly such that second hardware is controlled by first hardware among the hardware. Even though illustrated based on different blocks, an embodiment is not limited thereto, and some of the hardware of FIG. 2 (e.g., at least a portion of the processor 210, the memory 220, and the communication circuitry 280) may be included in a single integrated circuit such as a system on a chip (SoC). A type and/or the number of the hardware included in the electronic device 101 is not limited as illustrated in FIG. 2. For example, the electronic device 101 may include only some of hardware components illustrated in FIG. 2.

The processor 210 of the electronic device 101 according to an embodiment may include hardware for processing data based on one or more instructions. The hardware for processing the data may include, for example, an arithmetic and logic unit (ALU), a floating point unit (FPU), a field programmable gate array (FPGA), a central processing unit (CPU), and/or an application processor (AP). The number of the processor 210 may be one or more. For example, the processor 210 may have a structure of a multi-core processor such as a dual core, a quad core, or a hexa core.

The memory 220 of the electronic device 101 according to an embodiment may include a hardware component for storing data and/or an instruction inputted to and/or outputted from the processor 210. The memory 220 may include, for example, volatile memory such as random-access memory (RAM) and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include at least one of, for example, programmable ROM (PROM), erasable PROM (EPROM), electrically erasable PROM (EEPROM), flash memory, a hard disk, a compact disk, a solid state drive (SSD), and an embedded multimedia card (eMMC).

The display 250 of the electronic device 101 according to an embodiment may output visualized information to a user. For example, the display 265 may output visualized information to the user by being controlled by the processor 210 including circuitry such as a graphic processing unit (GPU). The display 250 may include a flat panel display (FPD) and/or electronic paper. The FPD may include a liquid crystal display (LCD), a plasma display panel (PDP), and/or one or more light emitting diodes (LEDs). The LED may include an organic LED (OLED).

The display 250 of the electronic device 101 according to an embodiment may include a sensor (e.g., a touch sensor panel (TSP)) for detecting an external object (e.g., a finger of the user) on the display 250. For example, based on the TSP, the electronic device 101 may detect an external object that contacts with the display 250 or is floating on the display 250. In response to detecting the external object, the electronic device 101 may execute a function related to a specific visual object corresponding to a position of the external object on the display 250 among visual objects being displayed in the display 250.

The speaker 270 according to an embodiment may output an audio signal. For example, the electronic device 101 may receive audio data from an external device (e.g., the electronic device 102 of FIG. 1, the server 108 of FIG. 1, a smartphone, a PC, a PDA, or an access point). The electronic device 101 may output the received audio data using the speaker 270. For example, the speaker 270 may receive an electrical signal. The speaker 270 may convert the electrical signal into a sound wave signal. The speaker 270 may output an audio signal including the converted sound wave signal. For example, the electronic device 101 may output an audio signal indicating a text. The electronic device may obtain a voice signal indicating an answer to the text to the user through the microphone 260 based on outputting the audio signal indicating the text.

The microphone 260 of the electronic device 101 according to an embodiment may receive audio data (e.g., a voice of the user). For example, the electronic device 101 may include one or more microphones. The microphone 260 may be disposed on a portion of a housing of the electronic device 101. The microphone 260 may be referred to as a feedback microphone in terms of being disposed adjacent to the speaker 270. The microphone 260 may be disposed on a portion of the housing including a sensor (e.g., the sensor module of FIG. 1) of the electronic device 101. The microphone 260 may be referred to as a feedforward microphone in terms of being disposed toward the outside of the electronic device 101. However, it is not limited thereto. The electronic device 101 may obtain a text corresponding to an utterance (or a speech) based on receiving a voice signal indicating the utterance of the user by using the microphone 260. For example, the electronic device 101 may obtain the text based on receiving the voice signal, based on speech to text (STT) and/or automatic speech recognition (ASR).

In an embodiment, the communication circuitry 280 of the electronic device 101 may include a hardware component for supporting transmission and/or reception of an electrical signal between the electronic device 101 and an external electronic device (e.g., a server that provides a large language model). The communication circuitry 280 may include, for example, at least one of a modulator and demodulator (MODEM), an antenna, and an optic/electronic (O/E) converter. The communication circuitry 480 may support transmission and/or reception of an electrical signal based on various types of protocol such as Ethernet, a local area network (LAN), a wide area network (WAN), a wireless fidelity (WiFi), Bluetooth, bluetooth low energy (BLE), ZigBee, long term evolution (LTE), 5G new radio (NR), and/or 6G.

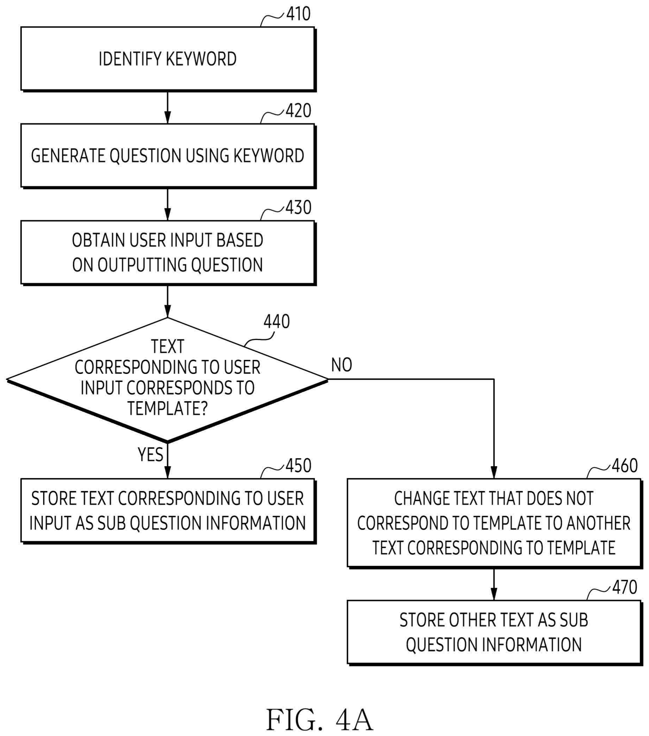

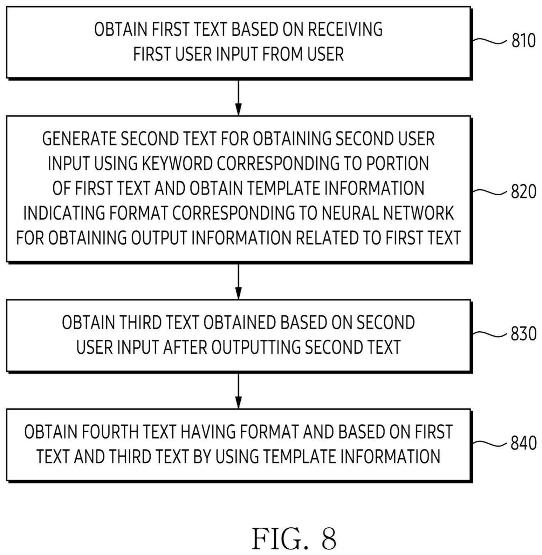

In the memory 220 of the electronic device 101 according to an embodiment, one or more instructions (or commands) indicating a calculation and/or an operation to be performed by the processor 210 on data may be stored. A set of the one or more instructions may be referred to as firmware, an operating system, a process, a routine, a sub-routine, and/or an application (e.g., the application 146 of FIG. 1). For example, when a set of a plurality of instructions distributed in a form of an operating system, firmware, a driver, and/or an application is executed, the electronic device 101 and/or the processor 210 may perform at least one of operations of FIGS. 4A and 8. Hereinafter, an application being installed in the electronic device 101 may mean that one or more instructions provided in a form of an application are stored in the memory 220 of the electronic device 101, and that the one or more applications are stored in a format (e.g., a file with an extension specified by an operating system of the electronic device 101) executable by the processor 210 of the electronic device 101.

The memory 220 of the electronic device 101 according to an embodiment may include an input processing unit 223 and/or an output processing unit 245. The input processing unit 223 may include a neural network that generates a text to be inputted to the output processing unit 245. The input processing unit 223 may be implemented based on a rule-based method, a statistical method (e.g., a neural network), a knowledge graph-based method, or a combination thereof.

For example, the electronic device 101 may identify a first user input from the user through an input device (e.g., the microphone 260). The first user input may indicate an audio signal. The first user input may be a touch input identified via the display 250. The first user input may indicate a text. For example, the first user input may indicate a main question for obtaining output information to be outputted through the output processing unit 245. The main question may be indicated as the text (e.g., "Recommend a travel destination").

For example, the electronic device 101 may identify a first text obtained based on receiving the first user input using a keyword identifier 225. The electronic device 101 may identify a portion of the first text. The electronic device 101 may identify the portion indicating a keyword. The electronic device 101 may identify the keyword using mapping data or using a morpheme analyzer based on the execution of the keyword identifier 225. For example, the electronic device 101 may identify a portion indicating a noun by analyzing a morpheme for the first text using the morpheme analyzer. The electronic device 101 may identify a keyword corresponding to the portion. The electronic device 101 may obtain one or more keyword categories corresponding to the keyword based on identifying the keyword. The electronic device 101 may use a question generator 230 to generate a second text for obtaining a user input related to a keyword category.

For example, based on the execution of the question generator 230, the electronic device 101 may generate a second text indicating a question based on the keyword (or the number of the keywords) identified through the keyword identifier 225. The second text may include at least one sentence. The electronic device 101 may obtain a second user input from the user based on outputting the second text. The second user input may indicate a third text indicating an answer to the second text. The electronic device 101 may output the second text based on displaying the second text on the display 250. The electronic device 101 may output the second text based on outputting an audio signal indicating the second text through the speaker 270. However, it is not limited thereto.

For example, the electronic device 101 may change the third text based on receiving the second user input. The third text may indicate an answer provided by the user to the electronic device 101. In a case that the third text indicates a sentence (e.g., "I prefer a red color"), the electronic device 101 may store the third text as sub question information. The sub question information may be referred to as answer information in terms of the third text indicating an answer. In a case that the third text indicates a word (e.g., a red color), the electronic device 101 may change it into the sentence (e.g., "I prefer a red color") including the word. The electronic device 101 may change a word into a sentence using mapping data corresponding to the word. For example, the electronic device 101 may change a word into a sentence through a neural network for changing a word into a sentence. The electronic device 101 may store a text changed into a sentence as sub question information. As an example, in a case that the third text indicates a sentence (e.g., "I'm going for approximately 2 nights and 3 days"), the electronic device 101 may change it into another sentence (e.g., "I'm planning to go on a trip for 2 nights and 3 days") having a format corresponding to the output processing unit 245. However, it is not limited thereto.

For example, the electronic device 101 may obtain template information having a format corresponding to the output processing unit 245 based on execution of a template generator 235. The electronic device 101 may change at least a portion of the first text received from the user to obtain template information. The template information may include a sentence structure, a sentence rule, and/or language information for a sentence. The template information may include a slot for a detailed search condition. The electronic device 101 may use mapping data for a keyword corresponding to the first text to obtain template information. In a case that template information may not be obtained using mapping data, the electronic device 101 may obtain template information from the first text using a neural network generating the template. The mapping data may include a frequently used question and information indicating an answer to the question.

For example, the electronic device 101 may obtain a fourth text to be inputted to the output processing unit 245 based on execution of a prompt generator 240. The electronic device 101 may obtain the fourth text by using main question information, sub question information, and/or template information. For example, fourth output information to be obtained by inputting the fourth text into the output processing unit 245 may include relatively more information than first output information to be obtained by inputting the first text obtained from the user into the output processing unit 245 by the electronic device 101. However, it is not limited thereto.

For example, the electronic device 101 may obtain output information by inputting the fourth text to the output processing unit 245. The output information may indicate an answer to the fourth text. Referring to FIG. 2, although the output processing unit 245 is illustrated to be included in the electronic device 101, the output processing unit 245 may be included in an external electronic device. The electronic device 101 may obtain output information by transmitting the fourth text to an external electronic device connected through communication circuitry.

For example, the output processing unit 245 may include a large language model (LLM). The large language model may mean a deep learning model for recognizing, converting, processing, or generating a specific text, image, and/or video based on data. The large language model, which is a form of a neural network including a plurality of parameters, may include a language model capable of outputting (or inferring) data without fine-tuning using a method such as few-shot learning. The output processing unit 245 may include at least a portion of a transformer model. The output processing unit 245 may be an example of a neural network trained to generate a response to a natural language input. The electronic device 101 may obtain output information configured with natural language by inputting the fourth text configured with the natural language to the output processing unit 245. The electronic device 101 may obtain output information that may be understood by the user.

As described above, the electronic device 101 according to an embodiment may change the first text obtained from the user from the first text to the fourth text by using the input processing unit 223 before inputting the first text to the output processing unit 245. The fourth text may include the first text. The fourth text may include content for the first text or a meaning for the first text. The electronic device 101 may provide the user with a more detailed answer than the answer to the first text by inputting the fourth text to the output processing unit 245. The electronic device 101 may provide a service through which the user may more easily utilize the output processing unit 245 through the input processing unit 223 for obtaining the fourth text.

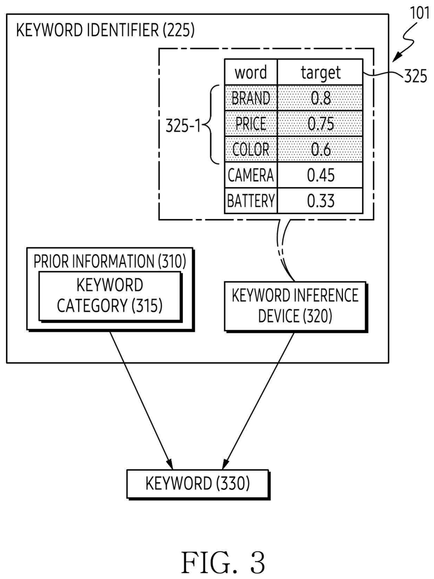

Hereinafter, an example of an operation in which the electronic device 101 identifies a keyword using the first text obtained from the user will be described later with reference to FIG. 3.

FIG. 3 illustrates an example of an operation in which an electronic device according to an embodiment obtains a keyword. An electronic device 101 of FIG. 3 may include the electronic device 101 of FIGS. 1 to 2.

Referring to FIG. 3, the electronic device 101 according to an embodiment may obtain a first text based on a first user input received from a user. The electronic device 101 may obtain a keyword using the first text based on execution of a keyword identifier 225.

For example, the electronic device 101 may obtain a keyword in the first text using prior information 310. The electronic device 101 may identify a morpheme of the first text. The electronic device 101 may identify a portion indicating a noun in the first text. For example, in a case that the electronic device 101 obtains a first text (e.g., "Recommend a travel destination"), it may identify a noun, a connective ending, and/or a sentence-closing ending by analyzing the morpheme of the first text. The electronic device 101 may obtain a keyword indicating the noun. However, it is not limited thereto.

For example, the electronic device 101 may determine a keyword category 315 mapped to the keyword based on the obtaining of the keyword. For example, in a case that the keyword is a 'region', the keyword category 315 may be determined using information related to the keyword, such as 'Seoul', 'Daejeon', 'Daegu', and 'Busan'. For example, the electronic device 101 may identify the keyword category 315 using a keyword based on regular expression matching. A regular expression may indicate a set of strings with a specific rule. The regular expression matching may mean a method for identifying a pattern of characters. The electronic device 101 may extract, from a keyword, the keyword category 315 related to the keyword through the regular expression matching indicating a plurality of keyword categories.

For example, the electronic device 101 may analyze the first text based on named entity recognition (NER). In a case that the electronic device 101 identifies a first text (e.g., "Recommend a place to travel in Busan"), the electronic device 101 may refrain from obtaining a keyword category (e.g., a region) corresponding to a named entity (or a specified word) (e.g., Busan) in the first text. However, it is not limited thereto.

For example, the electronic device 101 may identify a keyword using a keyword inference device 320 for inferring a context of a text. The keyword inference device 320 may be an example of a language model (LM) that allocates a probability value to each of components configuring a sentence. The electronic device 101 may obtain a probability value for each of components (e.g., words) included in the first text. For example, the probability value for each of the components (e.g., the words) included in the first text may be indicated as probability information 325. The electronic device 101 may obtain keywords 325-1 having a probability value exceeding a specified threshold value by using the probability information 325. For example, each of the keywords 325-1 may be mapped to a keyword category.

For example, the electronic device 101 may remove an overlapping keyword among a first keyword obtained using the prior information 310 and a second keyword obtained through the keyword inference device 320. The electronic device 101 may obtain a keyword 330 to be processed by a question generator (e.g., the question generator 230 of FIG. 2) by removing the overlapping keyword among the first keyword and the second keyword. For example, the electronic device 101 may use the prior information 310 and/or the keyword inference device 320 to obtain the keyword 330. In a case that the electronic device 101 obtains the keyword 330 using one of the prior information 310 and the keyword inference device 320, the operation of removing the overlapping keyword may be omitted.

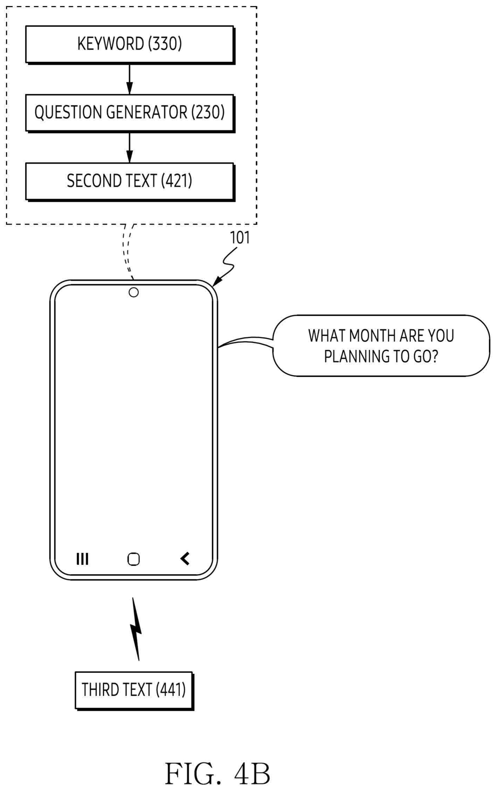

Hereinafter, an example of an operation in which the electronic device 101 generates a question from a keyword will be described later with reference to FIGS. 4A and 4B.

FIG. 4A illustrates an example of a flowchart indicating an operation of an electronic device according to an embodiment. FIG. 4B illustrates an example of an operation in which an electronic device according to an embodiment obtains sub question information by using an additional question. The electronic devices of FIGS. 4A and 4B may include the electronic device 101 of FIGS. 1 to 3. At least one of the operations of FIG. 4A may be performed by the electronic device 101 of FIG. 2. At least one of the operations of FIG. 4A may be controlled by the processor 210 of FIG. 2. Each of the operations of FIG. 4A may be performed sequentially, but is not necessarily performed sequentially. For example, an order of each of the operations may be changed, and at least two operations may be performed in parallel.

Referring to FIG. 4A, an electronic device according to an embodiment may identify a keyword in operation 410. The electronic device may obtain a first text corresponding to a user's speech based on a voice signal received through a microphone. The electronic device may identify a keyword corresponding to a portion of the first text based on obtaining the first text. The first text may be referred to as main question information related to output information to be obtained through an output processing unit (e.g., the output processing unit 245 of FIG. 2).

Referring to FIG. 4A, the electronic device according to an embodiment may generate a question using a keyword in operation 420. For example, a question may be generated from a keyword through a question generator (e.g., the question generator 230 of FIG. 2). The electronic device may generate a second text (e.g., "Do you have a favorite brand?") for obtaining a second user input related to a keyword category from the user by using the keyword category (e.g., a brand) mapped to a keyword indicating a specified word. The second text may indicate a question for obtaining an answer from the user. The electronic device may set the number of the second text to be generated based on the number of the keywords. However, it is not limited thereto. The electronic device may generate the question for obtaining, from the user, sub question information for supplementing main question information.

Referring to FIG. 4A, the electronic device according to an embodiment may obtain a user input based on outputting a question in operation 430. The user input may indicate a response to a question. However, it is not limited thereto. For example, a question may be referred to as an additional question in terms of being used to obtain additional information to describe content included in the first text in more detail. For example, the electronic device may obtain a third text based on obtaining the user input.

Referring to FIG. 4B, the electronic device 101 according to an embodiment may output a second text 421 obtained through a question generator 230 from a keyword 330. The electronic device 101 may display the second text 421 on a display (e.g., the display 250 of FIG. 2) or output an audio signal indicating the second text 421 through a speaker. After outputting the second text 421, the electronic device 101 may obtain a third text 441 based on a user input. The user input may be a voice signal received through a microphone or may include a touch input obtained via the display. For example, after outputting the audio signal indicating the second text 421 through the speaker, the electronic device 101 may obtain the third text 441 based on a user input indicating an utterance of the user through the microphone. The electronic device 101 may obtain the third text 441 as a response to the second text 421. In terms of processing data indicating interaction with the user, the question generator 230 may be referred to as an interaction module.

Referring to FIG. 4A, the electronic device according to an embodiment may identify whether a text corresponding to a user input corresponds to a template in operation 440. For example, the electronic device may identify whether it is a sentence by tokenizing the text indicated by the user input. The electronic device may identify whether the text has a specified template format. The electronic device may perform operation 440 using a deep learning model (or a neural network) for classifying a specified text having the specified template format. However, it is not limited thereto. A token may include a word and/or a phrase.

Referring to FIG. 4A, in a case that the text corresponds to the template (the operation 440-Yes), the electronic device according to an embodiment may store the text corresponding to the user input as sub question information (or answer information) in operation 450. For example, the electronic device may store the text as sub question information based on changing it to a text having a format corresponding to an output processing unit (e.g., the output processing unit 245 of FIG. 2).

Referring to FIG. 4A, in a case that the text does not correspond to the template (or in a case that the text corresponding to the user input is a word) (the operation 440-No), in operation 460, the electronic device according to an embodiment may change the text that does not correspond to the template to another text corresponding to the template. For example, in a case that a user input indicates a word, the electronic device may obtain a text indicating a sentence including the word. For example, after the electronic device outputs the second text (e.g., "Is there a place you want to go?"), in a case that the third text (e.g., the third text 441 of FIG. 4B) obtained from the user is a word (e.g., Jeju Island), the electronic device may change it to a text (or a sentence) (e.g., "I want to go to the region of Jeju Island") including the word (e.g., Jeju Island).

For example, based on obtaining a third text (e.g., Jeju Island) that indicates additional information for the main question information and does not correspond to the template, the electronic device may change the third text to another text (e.g., preferred region: Jeju Island) that corresponds to the template. In other words, the other text may have a format of a template and may not be configured as a sentence.

In operation 470, according to an embodiment, the electronic device may store the other text as sub question information. The sub question information may be included in a region of template information.

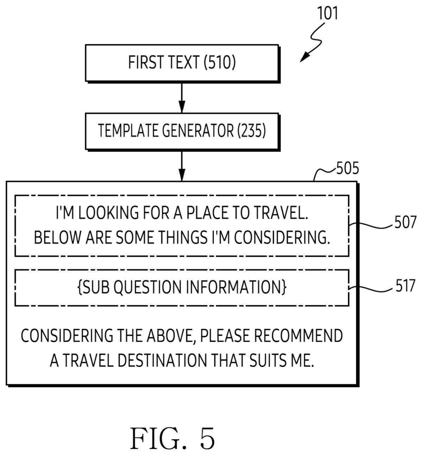

Hereinafter, an example of an operation of obtaining a template corresponding to the text obtained from the user by the electronic device will be described later with reference to FIG. 5.

FIG. 5 illustrates an example of a template obtained by an electronic device according to an embodiment. Referring to FIG. 5, an electronic device 101 of FIG. 5 may include the electronic device 101 of FIGS. 1 to 4B.

The electronic device 101 according to an embodiment may obtain a first text 510 based on receiving a user input from a user. The electronic device 101 may obtain a template 505 corresponding to the first text 510 based on execution of a template generator 235 independently of identifying a keyword using the first text 510. The electronic device 101 may change a format of a sentence included in the first text 510 to a format corresponding to an output processing unit (e.g., the output processing unit 245 of FIG. 2). The first text 510 may mean a request for output information to be outputted from the output processing unit. The first text 510 may be referred to as main question information in terms of meaning the request. The electronic device 101 may obtain the template 505 including at least a portion of the first text 510 and having a format corresponding to the output processing unit.

For example, the template 505 may be obtained based on a format of an input to be inputted to the output processing unit (e.g., the output processing unit 245 of FIG. 2). The template 505 may include a main question region 507 for including at least a portion of the first text 510. The template 505 may include a sub question region 517 for sub question information for specifying main question information included in the main question region 507. For example, the electronic device 101 may wait until it obtains a third text (e.g., the third text 441 of FIG. 4B) from the user to include sub question information in the template 505.

For example, the electronic device 101 may obtain a keyword (e.g., the keyword 330 of FIG. 3) through a keyword identifier (e.g., the keyword identifier 225 of FIG. 2) based on obtaining the first text 510.

For example, the electronic device 101 may obtain a second text (e.g., the second text 421 of FIG. 4B) based on execution of a question generator (e.g., the question generator 230 of FIG. 2) based on obtaining the keyword. The second text may mean a question for obtaining sub question information from the user. The electronic device 101 may guide the user to request sub question information based on outputting the second text.

For example, after outputting the second text, the electronic device 101 may obtain the third text (e.g., the third text 441 of FIG. 4B) based on a user input received from the user. The electronic device 101 may identify whether the third text is a sentence. In a case that the third text is a sentence, the electronic device 101 may store sub question information indicating the third text. In a case that the third text is a word, the electronic device 101 may generate a sentence including the word. The electronic device 101 may store the generated sentence as sub question information.

For example, the electronic device 101 may dispose the sub question information in the sub question region 517 based on obtaining the sub question information.

The electronic device 101 according to an embodiment may obtain the template 505 using the first text 510 indicating a query of the user. Based on obtaining the first text 510, the electronic device 101 may obtain the template 505 by using mapping data matched to a type of the first text 510. The electronic device 101 may infer a context of the first text 510 based on obtaining the first text 510. The electronic device 101 may obtain the template 505 matched to the context. The number of the template 505 obtained by the electronic device 101 may be one or more. The electronic device 101 may use at least one template selected by the user from among one or more templates. The electronic device 101 may identify an input from the user indicating selection of at least one template from among the one or more templates by using a user interface for selecting at least one template. The electronic device 101 may identify the at least one template based on identifying the input. However, it is not limited thereto.

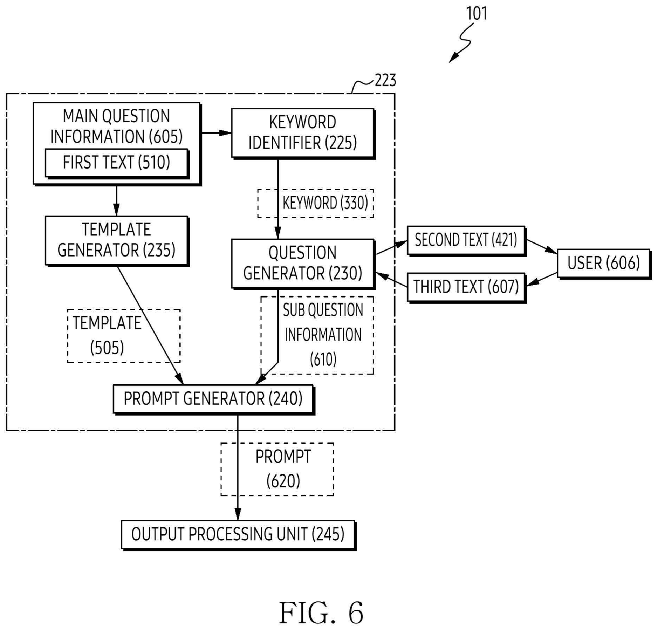

As described above, the electronic device 101 according to an embodiment may improve the quality of output information to be outputted from the output processing unit 245 based on obtaining the template 505. Based on identifying the request corresponding to the first text 510, the electronic device 101 may generate a prompt for specifically instructing output information to be outputted from the output processing unit 245. Hereinafter, an example of an operation in which the electronic device 101 generates a prompt for specifically instructing a result value of the output processing unit 245 will be described later with reference to FIG. 6.

FIG. 6 illustrates an example of an operation in which an electronic device according to an embodiment generates a prompt. Referring to FIG. 6, an electronic device 101 of FIG. 6 may include the electronic device 101 of FIGS. 1 to 5.

The electronic device 101 according to an embodiment may obtain main question information 605 from a user. The main question information 605 may be obtained by identifying a first text 510. For example, the electronic device 101 may obtain a keyword 330 through a keyword identifier 225 based on obtaining the main question information 605.

For example, the electronic device 101 may obtain a second text 421 through a question generator 230 based on obtaining the keyword 330. The second text 421 may mean a question for obtaining sub question information 610 from the user. The second text 421 may include at least one sentence. The number of the second text 421 may be set based on the number of the keyword 330. The number of sub questions included in a sub question region (e.g., the sub question region 517 of FIG. 5) may be changed according to the number of the second text 421.

For example, after outputting the second text 421, the electronic device 101 may obtain a third text 607 based on a user input received from a user 606. The third text 607 may indicate an answer of the user 606 to the second text 421. The electronic device 101 may identify whether the third text 607 is a sentence. The electronic device 101 may identify the sub question information 610 indicating the third text in a case that the third text 607 is a sentence (or in a case that the third text 607 is a text corresponding to a template). In a case that the third text 607 is a word (or in a case that the third text 607 is a text that does not correspond to a template), the electronic device 101 may generate a sentence (or a text corresponding to a template) including the word. The electronic device 101 may obtain the sub question information 610 indicating the generated sentence.

The electronic device 101 according to an embodiment may obtain the template 505 using the first text 510 through a template generator 235. The template 505 may be obtained based on a format corresponding to an output processing unit 245. The electronic device 101 may change the first text 510 to a sentence having a format corresponding to an output processing unit. The electronic device 101 may arrange the changed sentence within the main question region 507 of FIG. 5. The electronic device 101 may change the first text 510 to the sentence suitable as an input value for the output processing unit 245 in order to obtain an accurate output value as an answer to a context of the first text 510.

For example, the electronic device 101 may obtain a prompt 620 by inputting the template 505 and the sub question information 610 into a prompt generator 240. The electronic device 101 may obtain the prompt 620 by disposing the sub question information 610 in a sub question region (e.g., the sub question region 517 of FIG. 5) of the template 505. The prompt 620 may mean an input for generating a response from the output processing unit 245. The response may indicate an answer to the prompt 620.

The electronic device 101 according to an embodiment may output output information as a response to the prompt 620 by inputting the prompt 620 to the output processing unit 245. The electronic device 101 may obtain the output information using the output processing unit 245 included in an external electronic device. In order to provide the output information to the user, the electronic device 101 may output an audio signal indicating the output information through a speaker or display a text indicating the output information on a display. The electronic device 101 may provide the user with an interactive artificial intelligence service using the output processing unit 245.

As described above, the electronic device 101 according to an embodiment may provide prompt engineering to the user. The electronic device 101 may generate the prompt 620 for obtaining output information from the output processing unit 245 by inputting the first text 510 to an input processing unit 223 including a smaller number of parameters than the output processing unit 245. The prompt 620 may mean a natural language command for obtaining second output information having a relatively higher quality than first output information for the first text. For example, since the context included in the output information may become different according to the input inputted to the output processing unit 245, the electronic device 101 may change a text based on an input of the user to a prompt to obtain output information having a higher quality. The electronic device 101 may provide the user with a prompt engineering service that may use the interactive artificial intelligence service more conveniently based on changing a text to a prompt.

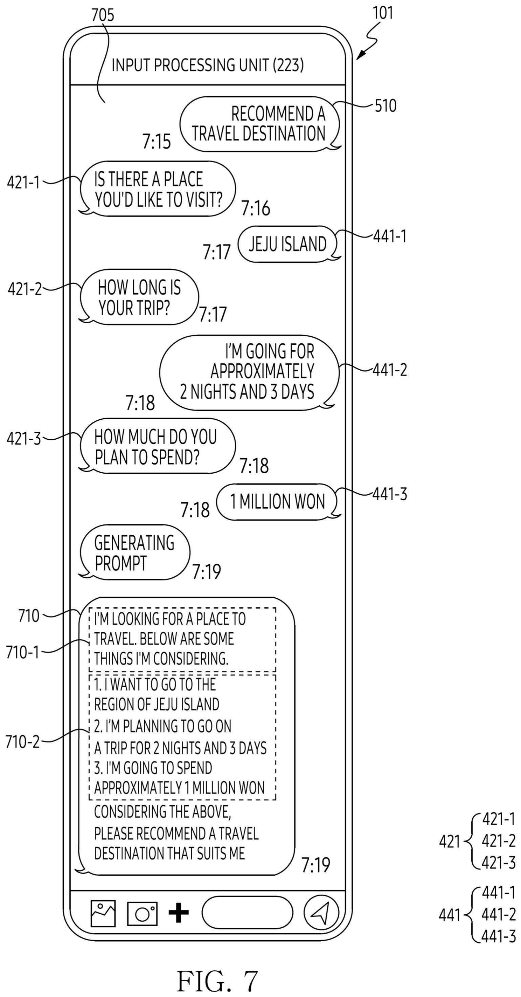

FIG. 7 illustrates an example of a user interface for obtaining a prompt according to an embodiment. An electronic device 101 of FIG. 7 may include the electronic device 101 of FIGS. 1 to 6.

Referring to FIG. 7, the electronic device 101 according to an embodiment may display a screen 705 for generating a prompt 710 to be inputted to an output processing unit (e.g., the output processing unit 245 of FIG. 2) on a display (e.g., the display 250 of FIG. 2) based on execution of an input processing unit (e.g., an input processing unit 223).

The electronic device 101 according to an embodiment may identify a user input indicating a first text 510 via a display 250. The electronic device 101 may identify a keyword (e.g., a travel destination) corresponding to a portion of the first text 510 based on identifying the first text 510. The electronic device 101 may identify a keyword category (e.g., a place, a period, and/or a cost) mapped to the keyword based on identifying the keyword. The electronic device 101 may obtain a second text 421 based on identifying the keyword category. The number of the second text 421 may be changed according to the number of the keyword (or the keyword category) corresponding to the first text 510.

For example, the electronic device 101 may output a sub text 421-1 indicating at least one question among the second text 421. The electronic device 101 may display a text object indicating the sub text 421-1 on the display 250. After outputting the sub text 421-1, the electronic device 101 may receive a user input indicating an answer to the sub text 421-1. The electronic device 101 may obtain a sub text 441-1 based on receiving the user input.

For example, the electronic device 101 may identify whether the sub text 441-1 is a sentence. The electronic device 101 may identify the sub text 441-1 including a word (e.g., Jeju Island). The electronic device 101 may obtain a sentence (e.g., "I want to go to the region of Jeju Island") including the word by using the word. The sentence may be obtained based on a template format corresponding to an output processing unit.

For example, the electronic device 101 may output a sub text 421-2 indicating at least one question among the second text 421. The electronic device 101 may display a text object indicating the sub text 421-2 on the display 250. After outputting the sub text 421-2, the electronic device 101 may obtain a sub text 441-2 indicating an answer of a user to the sub text 421-2. The electronic device 101 may identify whether the sub text 441-2 is a sentence based on obtaining the sub text 441-2. The electronic device 101 may identify the sub text 441-2 indicating a sentence (e.g., "I'm going for approximately 2 nights and 3 days"). The electronic device 101 may store the sub text 441-2 as sub question information. However, it is not limited thereto. As an example, the electronic device 101 may change the sentence indicating the sub text 441-2 to another sentence (e.g., "I'm planning to go on a trip for 2 nights and 3 days") corresponding to the format of the output processing unit. The electronic device 101 may obtain sub question information indicating the changed other sentence.

For example, the electronic device 101 may output a sub text 421-3 indicating at least one question among the second text 421. The electronic device 101 may display a text object indicating the sub text 421-3 on the display 250. After outputting the sub text 421-3, the electronic device 101 may receive a user input indicating an answer to the sub text 421-3. The electronic device 101 may obtain a sub text 441-3 based on receiving the user input. The electronic device 101 may generate a sentence (e.g., "I'm going to spend approximately 1 million won") including a word based on identifying the sub text 441-3 including the word. The electronic device 101 may store the sentence as sub question information. The sub texts 441-1, 441-2, and 441-3 may be included in a third text 441 in terms of indicating a user answer to the second text 421.

The electronic device 101 according to an embodiment may generate the prompt 710 based on obtaining the third text 441. The electronic device 101 may generate a fourth text based on the first text 510 and the third text 441. The electronic device 101 may display the prompt 710 indicating the fourth text on the display. The electronic device 101 may dispose main question information indicating the first text 510 in a main question region 710-1. The electronic device 101 may dispose a sentence obtained using the first text 510 and having a format for an input of the output processing unit in the main question region 710-1. For example, the electronic device 101 may arrange the sub question information obtained using the third text 441 in a sub question region 710-2. The electronic device 101 may display the prompt 710 on the display 250.

Independently of displaying the prompt 710, the electronic device 101 according to an embodiment may provide the user with output information obtained by inputting the fourth text indicating the prompt 710 to the output processing unit. For example, the electronic device 101 may obtain main question information indicating the first text 510 and sub question information indicating the third text 441. The electronic device 101 may output output information indicating an answer to the main question information by inputting the fourth text (e.g., a text indicating the prompt 710) including the main question information and the sub question information for assisting the main question information to the output processing unit.

For example, in a case of using the output processing unit included in an external electronic device, the electronic device 101 may provide a uniform resource locator (URL) for a screen indicating the output information to the user. For example, the electronic device 101 may display a text object indicating the output information outputted by inputting the fourth text indicating the prompt 710 to the output processing unit on the display 250. The operation of providing the output information obtained through the output processing unit by the electronic device 101 to the user is not limited to the above-described embodiment. As an example, the electronic device 101 may output an audio signal indicating output information through a speaker.

The electronic device 101 as described above may reduce usage of a data resource by using the input processing unit 223 including parameters relatively smaller than the output processing unit (e.g., the output processing unit 245 of FIG. 2). The electronic device 101 may reduce consumption of a battery based on reducing the usage of the data resource. For example, in a case that an output processing unit included in an external server is used, a cost may be incurred based on the number of inputs. The electronic device 101 may reduce the cost by generating the prompt 710 using the input processing unit 223.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

FIG. 8 illustrates an example of a flowchart indicating an operation of an electronic device according to an embodiment. The electronic device of FIG. 8 may include the electronic device 101 of FIGS. 1 to 7. At least one of operations of FIG. 8 may be performed by the electronic device 101 of FIG. 2. At least one of the operations of FIG. 8 may be controlled by the processor 210 of FIG. 2. Each of the operations of FIG. 8 may be performed sequentially, but is not necessarily performed sequentially. For example, an order of each of the operations may be changed, and at least two operations may be performed in parallel.

Referring to FIG. 8, in operation 810, the electronic device according to an embodiment may obtain a first text based on receiving a first user input from a user. The electronic device may obtain the first text based on obtaining a voice signal indicating the first text using a microphone (e.g., the microphone 260 of FIG. 2). The electronic device may obtain the first text based on a touch input identified via a display (e.g., the display 250 of FIG. 2).

Referring to FIG. 8, in operation 820, the electronic device according to an embodiment may generate a second text for obtaining a second user input using a keyword corresponding to a portion of the first text and obtain template information indicating a format corresponding to a neural network for obtaining output information related to the first text. The electronic device may extract a keyword from the first text based on execution of a keyword identifier (e.g., the keyword identifier 225 of FIG. 2). The electronic device may obtain a second text indicating a question related to a context of the first text through a question generator (e.g., the question generator 230 of FIG. 2) using the keyword. The electronic device may obtain template information having a format corresponding to the first text through a template generator (e.g., the template generator 235 of FIG. 2). The format may include a format corresponding to an input of an output processing unit (e.g., the output processing unit 245 of FIG. 2).

Referring to FIG. 8, in operation 830, the electronic device according to an embodiment may obtain a third text obtained based on the second user input after outputting the second text. The electronic device may output an audio signal indicating the second text through a speaker or display a text object indicating the second text on the display. The electronic device may obtain the third text indicating an answer to the second text based on the second user input. The electronic device may identify whether the third text is a sentence. The electronic device 101 may identify the third text indicating a sentence as sub question information.

Referring to FIG. 8, in operation 840, the electronic device according to an embodiment may obtain a fourth text having a format and based on the first text and the third text, using the template information. For example, the electronic device may obtain main question information indicating the first text and sub question information indicating the third text. The electronic device may obtain the fourth text including the main question information and the sub question information for assisting the main question information. The fourth text may indicate a prompt to be inputted to the output processing unit. The electronic device may output the output information indicating an answer to the main question information by inputting the fourth text to the output processing unit.

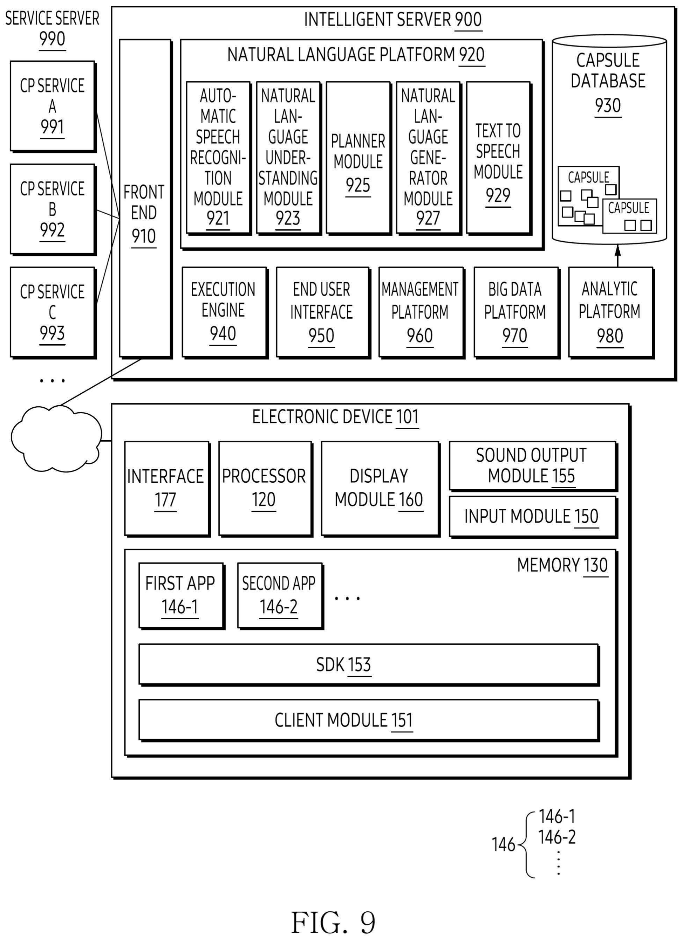

FIG. 9 is a block diagram indicating an integrated intelligence system according to various embodiments.

Referring to FIG. 9, the integrated intelligence system of an embodiment may include an electronic device 101, an intelligent server 900 (e.g., the server 108 of FIG. 1), and a service server 990 (e.g., the server 108 of FIG. 1).

An electronic device 101 of an embodiment may be a terminal device (or an electronic device) capable of connecting to the Internet, and may be, for example, a mobile phone, a smartphone, a personal digital assistant (PDA), a notebook computer, a TV, a white home appliance, a wearable device, an HMD, or a smart speaker.

According to the illustrated embodiment, the electronic device 101 may include an interface 177, an input module 150, a sound output module 155, a display module 160, memory 130, or a processor 120. The listed components may be operably or electronically coupled with each other.

The interface 177 of an embodiment may be configured to transmit and receive data by being connected to an external device. The input module 150 of an embodiment may receive sound (e.g., a user utterance) and convert the sound into an electrical signal. The sound output module 155 of an embodiment may output the electrical signal as sound (e.g., a voice).

The display module 160 of an embodiment may be configured to display an image or a video. The display module 160 of an embodiment may also display a graphic user interface (GUI) of an app (or an application program) being executed. The display module 160 of an embodiment may receive a touch input through a touch sensor. For example, the display module 160 may receive a text input through a touch sensor of an image keyboard region displayed in the display module 160.

The memory 130 of an embodiment may store a client module 151, a software development kit (SDK) 153, and a plurality of apps 146. The client module 151 and the SDK 153 may configure a framework (or a solution program) for performing a general-purpose function. In addition, the client module 151 or the SDK 153 may configure a framework for processing a user input (e.g., a voice input, a text input, and a touch input).

The plurality of apps 146 stored in the memory 130 of an embodiment may be a program for performing a specified function. According to an embodiment, the plurality of apps 146 may include a first app 146-1 and a second app 146-2. According to an embodiment, each of the plurality of apps 146 may include a plurality of operations for performing the specified function. For example, the apps may include an alarm app, a message app, and/or a schedule app. According to an embodiment, the plurality of apps 146 may sequentially execute at least a portion of the plurality of operations by being executed by the processor 120.

The processor 120 of an embodiment may control an overall operation of the electronic device 101. For example, the processor 120 may perform a specified operation by being electrically connected to the interface 177, the input module 150, the sound output module 155, and the display module 160.

The processor 120 of an embodiment may also perform a specified function by executing a program stored in the memory 130. For example, the processor 120 may perform the following operation for processing a user input by executing at least one of the client module 151 or the SDK 153. For example, the processor 120 may control the operation of the plurality of apps 146 through the SDK 153. The following operation described as an operation of the client module 151 or the SDK 153 may be an operation by the execution of the processor 120.

The client module 151 of an embodiment may receive a user input. For example, the client module 151 may receive a voice signal corresponding to a user utterance sensed through the input module 150. Alternatively, the client module 151 may receive a touch input sensed through the display module 160. Alternatively, the client module 151 may receive a text input sensed through a keyboard or an image keyboard. In addition, the client module 151 may receive various types of user input sensed through an input module included in the electronic device 101 or an input module connected to the electronic device 101. The client module 151 may transmit the received user input to the intelligent server 900. The client module 151 may transmit state information of the electronic device 101 to the intelligent server 900 together with the received user input. The state information may be, for example, execution state information of an app.

The client module 151 of an embodiment may receive a result corresponding to the received user input. For example, in a case that the result corresponding to the received user input may be calculated on the intelligent server 900, the client module 151 may receive a result corresponding to the received voice input. The client module 151 may display the received result on the display module 160. In addition, the client module 151 may output the received result as audio through the sound output module 155.

The client module 151 of an embodiment may receive a plan corresponding to the received user input. The client module 151 may display a result of executing a plurality of operations of an app on the display module 160 according to the plan. For example, the client module 151 may sequentially display the execution result of the plurality of operations on the display and output audio through the sound output module 155. For another example, the electronic device 101 may display only a partial result (e.g., a result of the last operation) of executing the plurality of operations on the display module 160 and output it as audio through the sound output module 155.

According to an embodiment, the client module 151 may receive a request for obtaining information required to calculate a result corresponding to a user input from the intelligent server 900. According to an embodiment, the client module 151 may transmit the required information to the intelligent server 900 in response to the request.

The client module 151 of an embodiment may transmit result information of executing a plurality of operations according to a plan to the intelligent server 900. The intelligent server 900 may check that the received user input has been correctly processed using the result information.

The client module 151 of an embodiment may include a voice recognition module. According to an embodiment, the client module 151 may recognize a voice input that performs a limited function through the voice recognition module. For example, the client module 151 may perform an intelligent app for processing a voice input for performing an organic operation through a specified input (e.g., "wake up!").

The intelligent server 900 of an embodiment may receive information related to a user voice input from the electronic device 101 through a communication network. According to an embodiment, the intelligent server 900 may change data related to the received voice input to text data. According to an embodiment, the intelligent server 900 may generate a plan for performing a task corresponding to the user voice input based on the text data.

According to an embodiment, the plan may be generated by an artificial intelligent (AI) system. The artificial intelligent system may be a rule-based system, or a neural network-based system (e.g., a feedforward neural network (FNN) and a recurrent neural network (RNN)). Alternatively, it may also be a combination of the above-description or another artificial intelligent system. According to an embodiment, a plan may be selected from a set of predefined plans, or may be generated in real time in response to a user request. For example, the artificial intelligent system may select at least one plan of a plurality of predefined plans.

The intelligent server 900 of an embodiment may transmit a result according to the generated plan to the electronic device 101 or transmit the generated plan to the electronic device 101. According to an embodiment, the electronic device 101 may display a result according to the plan on the display module 160. According to an embodiment, the electronic device 101 may display a result of executing an operation according to the plan on the display module 160.

The intelligent server 900 of an embodiment may include a front end 910, a natural language platform 920, a capsule DB 930, an execution engine 940, an end user interface 950, a management platform 960, a big data platform 970, or an analytic platform 980.

The front end 910 of an embodiment may receive a user input received from the electronic device 101. The front end 910 may transmit a response corresponding to the user input.

According to an embodiment, the natural language platform 920 may include an automatic speech recognition module (an ASR module) 921, a natural language understanding module (an NLU module) 923, a planner module 925, a natural language generator module (an NLG module) 927, or a text to speech module (a TTS module) 929.

The automatic speech recognition module 921 of an embodiment may convert a voice input received from the electronic device 101 into text data. The natural language understanding module 923 of an embodiment may identify an intention of a user by using text data of a voice input. For example, the natural language understanding module 923 may identify an intention of the user by performing syntactic analysis or semantic analysis on a user input in a form of text data. The natural language understanding module 923 of an embodiment may determine an intention of the user by identifying a meaning of a word extracted from the user input using a linguistic feature (e.g., a syntactic element) of a morpheme or a phrase, and matching the meaning of the identified word to the intention. The natural language understanding module 923 may obtain intent information corresponding to a user utterance. The intent information may be information indicating an intention of the user determined by interpreting text data. The intent information may include information indicating an operation or a function that the user intends to execute using a device.

The planner module 925 of an embodiment may generate a plan using the intention and the parameter determined by the natural language understanding module 923. According to an embodiment, the planner module 925 may determine a plurality of domains required to perform a task based on the determined intention. The planner module 925 may determine a plurality of operations included in each of the plurality of domains determined based on the intention. According to an embodiment, the planner module 925 may determine a parameter required to execute the plurality of determined operations or a result value outputted by execution of the plurality of operations. The parameter and the result value may be defined as a concept of a specified format (or class). Accordingly, the plan may include a plurality of operations determined by an intention of the user and a plurality of concepts. The planner module 925 may determine a relationship between the plurality of operations and the plurality of concepts in a step-by-step (or hierarchical) manner. For example, the planner module 925 may determine an execution order of the plurality of operations determined based on an intention of the user, based on the plurality of concepts. In other words, the planner module 925 may determine an execution order of the plurality of operations based on a parameter required to execute the plurality of operations and a result outputted by execution of the plurality of operations. Accordingly, the planner module 925 may generate a plan including associated information (e.g., ontology) between the plurality of operations and the plurality of concepts. The planner module 925 may generate a plan using information stored in a capsule database 930 in which a set of relationships between a concept and an operation is stored.

The natural language generator module 927 of an embodiment may change specified information to a text form. The information changed to the text form may be in a form of a natural language utterance. The text to speech module 929 of an embodiment may change information in a text form to information in a voice form.

According to an embodiment, a part or all of a function of the natural language platform 920 may also be implemented in the electronic device 101.

The capsule database 930 may store information on a relationship between a plurality of concepts and operations corresponding to a plurality of domains. A capsule according to an embodiment may include a plurality of action objects (or action information) and concept objects (or concept information) included in the plan. According to an embodiment, the capsule database 930 may store a plurality of capsules in a form of a concept action network (CAN). According to an embodiment, the plurality of capsules may be stored in a function registry included in the capsule database 930.

The capsule database 930 may include a strategy registry in which strategy information required when determining a plan corresponding to a voice input is stored. The strategy information may include reference information for determining a plan in a case that there are a plurality of plans corresponding to a user input. According to an embodiment, the capsule database 930 may include a follow up registry in which information of a follow-up operation for suggesting a follow-up operation to the user in a specified situation is stored. The follow-up operation may include, for example, a follow-up utterance. According to an embodiment, the capsule database 930 may include a layout registry that stores layout information of information outputted through the electronic device 101. According to an embodiment, the capsule database 930 may include a vocabulary registry in which vocabulary information included in capsule information is stored. According to an embodiment, the capsule database 930 may include a dialog registry in which dialog (or interaction) information with a user is stored. The capsule database 930 may update an object stored through a developer tool. The developer tool may include, for example, a function editor for updating an action object or a concept object. The developer tool may include a vocabulary editor for updating vocabulary. The developer tool may include a strategy editor that generates and registers a strategy determining a plan. The developer tool may include a dialog editor that generates a dialog with the user. The developer tool may include a follow up editor capable of activating a follow-up goal and editing a follow-up utterance providing a hint. The follow-up goal may be determined based on a currently set goal, a preference of the user, or an environmental condition. In an embodiment, the capsule database 930 may also be implemented in the electronic device 101.

The execution engine 940 of an embodiment may calculate a result using the generated plan. The end user interface 950 may transmit the calculated result to the electronic device 101. Accordingly, the electronic device 101 may receive the result and provide the user with the received result. The management platform 960 of an embodiment may manage information used in the intelligent server 900. The big data platform 970 of an embodiment may collect data of the user. The analytic platform 980 of an embodiment may manage a quality of service (QoS) of the intelligent server 900. For example, the analytic platform 980 may manage a component and processing speed (or efficiency) of the intelligent server 900.

The service server 990 of an embodiment may include a CP service A 991, a CP service B 992, and a CP service C 993. The service server 990 of an embodiment may provide a specified service (e.g., a food order or a hotel reservation) to the electronic device 101. According to an embodiment, the service server 990 may be a server operated by a third party. The service server 990 of an embodiment may provide information for generating a plan corresponding to the received user input to the intelligent server 200. The provided information may be stored in the capsule database 230. In addition, the service server 990 may provide result information according to a plan to the intelligent server 900.

In the integrated intelligence system of FIG. 9, the electronic device 101 may provide the user with various intelligent services in response to a user input. The user input may include, for example, an input through a physical button, a touch input, or a voice input.

In an embodiment, the electronic device 101 may provide a voice recognition service through an intelligent app (or a voice recognition app) stored therein. In this case, for example, the electronic device 101 may recognize a user utterance or a voice input received through the microphone and provide the user with a service corresponding to the recognized voice input.

In an embodiment, the electronic device 101 may perform a specified operation alone or together with the intelligent server and/or the service server based on the received voice input. For example, the electronic device 101 may execute an app corresponding to the received voice input and perform a specified operation through the executed app.

In an embodiment, in a case that the electronic device 101 provides a service with the intelligent server 900 and/or the service server 990, the electronic device 101 may detect a user utterance using the input module 150 and generate a signal (or voice data) corresponding to the detected user utterance. The electronic device 101 may transmit the voice data to the intelligent server 900 using the interface 177.

As a response to the voice input received from the electronic device 101, the intelligent server 900 according to an embodiment may generate a plan for performing a task corresponding to the voice input, or a result of performing an operation according to the plan. The plan may include, for example, a plurality of operations for performing a task corresponding to a voice input of the user, and a plurality of concepts related to the plurality of operations. The concept may define a parameter inputted to execution of the plurality of operations or a result value outputted by the execution of the plurality of operations. The plan may include associated information between a plurality of operations and a plurality of concepts.

The electronic device 101 of an embodiment may receive the response using the interface 177. The electronic device 101 may output a voice signal generated inside the electronic device 101 to the outside using the sound output module 155, or may output an image generated inside the electronic device 101 to the outside using the display module 160.

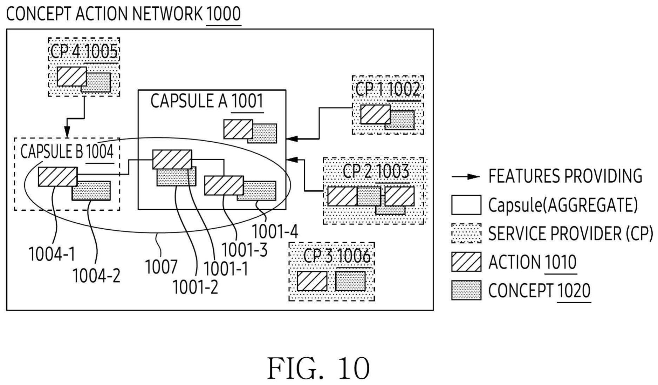

FIG. 10 is a diagram indicating a form in which relationship information between a concept and an operation is stored in a database according to various embodiments.

A capsule database (e.g., the capsule database 930 of FIG. 9) of the intelligent server (e.g., the intelligent server 900 of FIG. 9) may store a capsule in a form of a concept action network (CAN). The capsule database may store an operation for processing a task corresponding to a voice input of the user, and a parameter required for the operation in a form of a concept action network (CAN).

The capsule database may store a plurality of capsules (a capsule A 1001 and a capsule B 1004) corresponding to each of a plurality of domains (e.g., applications). According to an embodiment, a capsule (e.g., the capsule A 1001) may correspond to a domain (e.g., a location (geo) and an application). In addition, at least one service provider (e.g., a CP 1 1002, a CP 2 1003, a CP 3 1006, or a CP 4 1005) for performing a function on a domain related to a capsule may correspond to the capsule. According to an embodiment, a capsule may include at least one action 1010 and at least one concept 1020 for performing a specified function.

The natural language platform (e.g., the natural language platform 920 of FIG. 9) may generate a plan for performing a task corresponding to the voice input received by using a capsule stored in a capsule database. For example, a planner module (e.g., the planner module 925 of FIG. 9) of the natural language platform may generate a plan using a capsule stored in a capsule database. For example, a plan 1007 may be generated by using operations 1001-1 and 1001-3 and concepts 1001-2 and 1001-4 of the capsule A 1001, and an operation 1004-1 and a concept 1004-2 of the capsule B 1004.

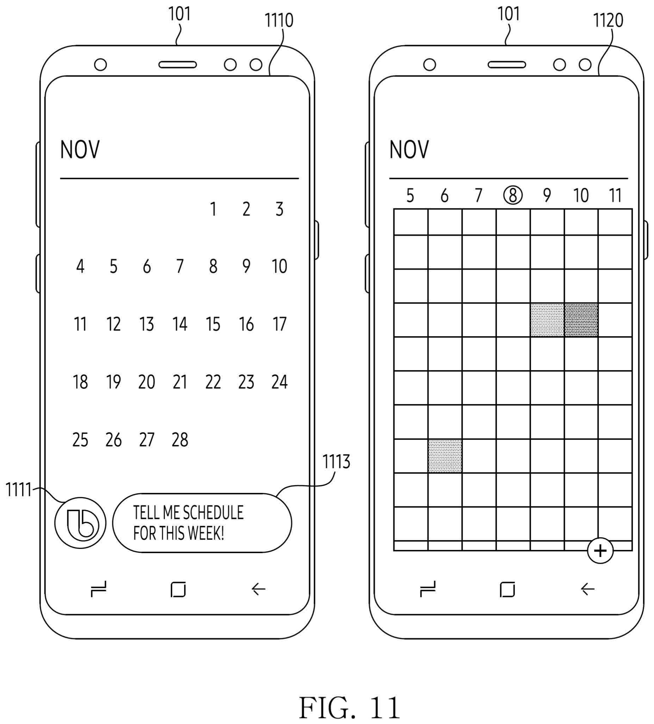

FIG. 11 is a diagram indicating a screen in which an electronic device according to various embodiments processes a voice input received through an intelligent app.

An electronic device 101 may execute an intelligent app to process a user input through an intelligent server (e.g., the intelligent server 200 of FIG. 2).

According to an embodiment, on a screen 1110, when the electronic device 101 recognizes a specified voice input (e.g., "wake up!") or receives an input through a hardware key (e.g., a dedicated hardware key), it may execute the intelligent app for processing the voice input. For example, the electronic device 101 may execute the intelligent app in a state of executing a schedule app, for example. According to an embodiment, the electronic device 101 may display an object (e.g., an icon) 1111 corresponding to the intelligent app on a display module (e.g., the display module 160 of FIG. 1). According to an embodiment, the electronic device 101 may receive a voice input by a user utterance. For example, the electronic device 101 may receive a voice input of "Tell me schedule for this week!". According to an embodiment, the electronic device 101 may display a user interface (UI) 1113 (e.g., an input window) of an intelligent app in which text data of the received voice input is displayed on the display module (e.g., the display module 160 of FIG. 1).

According to an embodiment, on a screen 1120, the electronic device 101 may display a result corresponding to the received voice input on the display module (e.g., the display module 160 of FIG. 1). For example, the electronic device 101 may receive a plan corresponding to the received user input and display 'this week's schedule' on the display module 160 according to the plan.

The electronic device according to an embodiment may change an input value to improve quality of a result value of a large language model. The electronic device may generate a prompt related to the input value obtained based on the user input and having a format suitable for the large language model. A method for generating a prompt in which the electronic device has the format suitable for the large language model may be required.

An electronic device 101 according to an embodiment as described above may include at least one processor 210 including processing circuitry and memory 220, storing instructions, including one or more storage media. The instructions, when executed by the at least one processor individually or collectively, may cause the electronic device to obtain a first text 510, based on receiving a first user input from a user. The instructions, when executed by the at least one processor individually or collectively, may cause the electronic device to obtain template information indicating a format corresponding to a neural network 245 for obtaining output information related to the first text and generate a second text 421 for obtaining a second user input, using a keyword 330 corresponding to a portion of the first text. The instructions, when executed by the at least one processor individually or collectively, may cause the electronic device to obtain a third text 441 obtained based on the second user input, after outputting the second text. The instructions, when executed by the at least one processor individually or collectively, may cause the electronic device to obtain a fourth text having the format and based on the first text and the third text, using the template information.

For example, the instructions, when executed by the at least one processor individually or collectively, may cause the electronic device to obtain main question information indicating the first text and sub question information indicating the third text. The instructions, when executed by the at least one processor individually or collectively, may cause the electronic device to output the output information indicating an answer to the main question information by inputting the fourth text including the main question information and the sub question information for assisting the main question information to the neural network.

For example, the instructions, when executed by the at least one processor individually or collectively, may cause the electronic device to generate the second text indicating a question for obtaining the sub question information from the user.

For example, the electronic device may further include a microphone 260. The instructions, when executed by the at least one processor individually or collectively, may cause the electronic device to, based on receiving the first user input indicating an utterance of the user through the microphone, obtain the first text corresponding to the utterance.

For example, the electronic device may further include a speaker 270. The instructions, when executed by the at least one processor individually or collectively, may cause the electronic device to obtain the third text based on the second user input indicating another utterance of the user through the microphone, after outputting an audio signal indicating the second text through the speaker.

For example, the instructions, when executed by the at least one processor individually or collectively, may cause the electronic device to obtain the third text indicating a sentence including a word when the second user input indicates the word.

For example, the instructions, when executed by the at least one processor individually or collectively, may cause the electronic device to generate the second text to obtain the second user input related to a keyword category from the user, using the keyword category mapped to the keyword indicating a specified word. The second text may include at least one sentence.

For example, the electronic device may further include a display 250. The instructions, when executed by the at least one processor individually or collectively, may cause the electronic device to obtain the first text, based on receiving the first user input using a screen 705 to obtain a text. The instructions, when executed by the at least one processor individually or collectively, may cause the electronic device to display a first text object indicating the second text on the display. The instructions, when executed by the at least one processor individually or collectively, may cause the electronic device to obtain the third text, based on receiving the second user input using the screen. The instructions, when executed by the at least one processor individually or collectively, may cause the electronic device to display a second text object indicating the output information outputted by inputting the fourth text to the neural network on the display.

For example, the instructions, when executed by the at least one processor individually or collectively, may cause the electronic device to determine the number of the second text based on the number of the keyword.

A method of an electronic device 101 according to an embodiment as described above may include obtaining a first text 510, based on receiving a first user input from a user. The method may include obtaining template information indicating a format corresponding to a neural network 245 for obtaining output information related to the first text and generate a second text 421 for obtaining a second user input, using a keyword 330 corresponding to a portion of the first text. The method may include obtaining a third text 441 obtained based on the second user input, after outputting the second text. The method may include obtaining a fourth text having the format and based on the first text and the third text, using the template information.

For example, obtaining the fourth text may include obtaining main question information indicating the first text and sub question information indicating the third text. Obtaining the fourth text may include outputting the output information indicating an answer to the main question information by inputting the fourth text including the main question information and the sub question information for assisting the main question information to the neural network.

For example, the method may include generating the second text indicating a question for obtaining the sub question information from the user.

For example, obtaining the first text may include, based on receiving the first user input indicating an utterance of the user through a microphone 260, obtaining the first text corresponding to the utterance.

For example, obtaining the third text may include obtaining the third text based on the second user input indicating another utterance of the user through the microphone, after outputting an audio signal indicating the second text through a speaker 270.

For example, obtaining the third text may include obtaining the third text indicating a sentence including a word when the second user input indicates the word.

In a computer readable storage medium storing one or more programs according to an embodiment as described above, the one or more programs, when executed by a processor 210 of an electronic device 101, may be configured to cause the electronic device to obtain a first text 510, based on receiving a first user input from a user. The one or more programs, when executed by the processor of the electronic device, may be configured to cause the electronic device to obtain template information indicating a format corresponding to a neural network 245 for obtaining output information related to the first text and generate a second text 421 for obtaining a second user input, using a keyword corresponding to a portion of the first text. The one or more programs, when executed by the processor of the electronic device, may be configured to cause the electronic device to obtain a third text 441 obtained based on the second user input, after outputting the second text. The one or more programs, when executed by the processor of the electronic device, may be configured to cause the electronic device to obtain a fourth text having the format and based on the first text and the third text, using the template information.

For example, the one or more programs, when executed by the processor of the electronic device, may be configured to cause the electronic device to obtain main question information indicating the first text and sub question information indicating the third text. The one or more programs, when executed by the processor of the electronic device, may be configured to cause the electronic device to output the output information indicating an answer to the main question information by inputting the fourth text including the main question information and the sub question information for assisting the main question information to the neural network.

For example, the one or more programs, when executed by the processor of the electronic device, may be configured to cause the electronic device to generate the second text indicating a question for obtaining the sub question information from the user.

For example, the one or more programs, when executed by the processor of the electronic device, may be configured to cause the electronic device to, based on receiving the first user input indicating an utterance of the user through a microphone 260, obtain the first text corresponding to the utterance.

For example, the one or more programs, when executed by the processor of the electronic device, may be configured to cause the electronic device to obtain the third text based on the second user input indicating another utterance of the user through the microphone, after outputting an audio signal indicating the second text through a speaker 270.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved. Therefore, other implementations, other embodiments, and those equivalent to the scope of the claims are in the scope of the claims described later.

## Claims

1. An electronic device (101), comprising:
memory (220), storing instructions, comprising one or more storage mediums,
at least one processor (210) comprising processing circuitry; and
wherein the instructions, when executed by the at least one processor individually or collectively, cause the electronic device to:
obtain a first text (510), based on receiving a first user input from a user;
obtain template information indicating a format corresponding to a neural network (245) for obtaining output information related to the first text and generate a second text (421) for obtaining a second user input, using a keyword (330) corresponding to a portion of the first text;
obtain a third text (441) obtained based on the second user input, after outputting the second text; and
obtain a fourth text having the format and based on the first text and the third text, using the template information.

2. The electronic device of claim 1,
wherein the instructions, when executed by the at least one processor individually or collectively, cause the electronic device to:
obtain main question information indicating the first text and sub question information indicating the third text, and
output the output information indicating an answer to the main question information by inputting the fourth text including the main question information and the sub question information for assisting the main question information to the neural network.

3. The electronic device of any one of claim 1 and claim 2,
wherein the instructions, when executed by the at least one processor individually or collectively, cause the electronic device to:
generate the second text indicating a question for obtaining the sub question information from the user.

4. The electronic device of any one of claim 1 to claim 3, further comprising:
a microphone (260);
wherein the instructions, when executed by the at least one processor individually or collectively, cause the electronic device to:
based on receiving the first user input indicating an utterance of the user through the microphone, obtain the first text corresponding to the utterance.

5. The electronic device of any one of claim 1 to claim 4, further comprising:
a speaker (270);
wherein the instructions, when executed by the at least one processor individually or collectively, cause the electronic device to:
obtain the third text based on the second user input indicating another utterance of the user through the microphone, after outputting an audio signal indicating the second text through the speaker.

6. The electronic device of any one of claim 1 to claim 5,
wherein the instructions, when executed by the at least one processor individually or collectively, cause the electronic device to:
obtain the third text indicating a sentence including a word when the second user input indicates the word.

7. The electronic device of any one of claim 1 to claim 6,
wherein the instructions, when executed by the at least one processor individually or collectively, cause the electronic device to:
generate the second text to obtain the second user input related to a keyword category from the user, using the keyword category mapped to the keyword indicating a specified word, and
wherein the second text includes at least one sentence.

8. The electronic device of any one of claim 1 to claim 7, further comprising:
a display (250);
wherein the instructions, when executed by the at least one processor individually or collectively, cause the electronic device to:
obtain the first text, based on receiving the first user input using a screen (705) to obtain a text,
display a first text object indicating the second text on the display,
obtain the third text, based on receiving the second user input using the screen, and
display a second text object indicating the output information outputted by inputting the fourth text to the neural network on the display.

9. The electronic device of any one of claim 1 to claim 8,
wherein the instructions, when executed by the at least one processor individually or collectively, cause the electronic device to:
determine the number of the second text based on the number of the keyword.

10. A method of an electronic device (101), the method comprising:
obtaining a first text (510), based on receiving a first user input from a user;
obtaining template information indicating a format corresponding to a neural network (245) for obtaining output information related to the first text and generate a second text (421) for obtaining a second user input, using a keyword (330) corresponding to a portion of the first text;
obtaining a third text (441) obtained based on the second user input, after outputting the second text; and
obtaining a fourth text having the format and based on the first text and the third text, using the template information.

11. The method of claim 10, obtaining the fourth text comprising:
obtaining main question information indicating the first text and sub question information indicating the third text, and
outputting the output information indicating an answer to the main question information by inputting the fourth text including the main question information and the sub question information for assisting the main question information to the neural network.

12. The method of any one of claim 10 and claim 11, comprising:
generating the second text indicating a question for obtaining the sub question information from the user.

13. The method of any one of claim 10 to claim 12, obtaining the first text comprising:
based on receiving the first user input indicating an utterance of the user through a microphone (260), obtaining the first text corresponding to the utterance.

14. The method of any one of claim 10 to claim 13, obtaining the third text comprising:
obtaining the third text based on the second user input indicating another utterance of the user through the microphone, after outputting an audio signal indicating the second text through a speaker (270).

15. A computer readable storage medium storing one or more programs, wherein the one or more programs, when executed by a processor of an electronic device, are configured to cause the electronic device to:
obtain a first text (510), based on receiving a first user input from a user;
obtain template information indicating a format corresponding to a neural network (245) for obtaining output information related to the first text and generate a second text (421) for obtaining a second user input, using a keyword (330) corresponding to a portion of the first text;
obtain a third text (441) obtained based on the second user input, after outputting the second text; and
obtain a fourth text having the format and based on the first text and the third text, using the template information.
